Europäisches Patentamt

European Patent Office

Office européen des brevets

(11) Publication number: **0 087 978**

**B1**

## EUROPEAN PATENT SPECIFICATION

(45) Date of publication of patent specification: **10.05.89**

(51) Int. Cl.⁴: **G 06 F 9/44**

(21) Application number: **83301103.4**

(22) Date of filing: **02.03.83**

(54) Information processing unit.

(30) Priority: **03.03.82 JP 33435/82**

(43) Date of publication of application:
**07.09.83 Bulletin 83/36**

(45) Publication of the grant of the patent:
**10.05.89 Bulletin 89/19**

(84) Designated Contracting States:
**DE FR GB**

(56) References cited:
**FR-A-2 083 696**
**US-A-3 949 379**
**US-A-3 962 706**
**US-A-4 153 941**

(73) Proprietor: **FUJITSU LIMITED**
**1015, Kamikodanaka Nakahara-ku**
**Kawasaki-shi Kanagawa 211 (JP)**

(72) Inventor: **Uchida, Keiichiro**
**1871-7, Hino-cho Konan-ku**
**Yokohama-shi Kanagawa, 223 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

# Description

The present invention relates to an information processing unit and, more particularly, to a data flow type information processing unit.

In a Von Neumann type information processing unit, the execution of an instruction is subject to what is called sequential control but, in a data flow type information processing unit, an instruction can be executed when data necessary therefor is available and the sequence of the execution of instructions can be freely determined by hardware and, further, a plurality of instructions can be executed in parallel. Therefore, a data flow type information processing unit is effective, for example, for the implementation of a vector processor which executes vector instructions in parallel.

However, the application of the configuration of a conventional data flow type information processing unit to an information processing unit for scientific computations encounters various problems. A major one of the problems is that, in the conventional data flow type information processing unit, an instruction and data (values) are mixed into one packet for transfer. On account of this, in the conventional data flow type information processing unit, a hardware circuit for moving an instruction and a circuit for transferring data cannot be separated, which offsets one of the advantages that break what is called the Von Neumann bottleneck.

US—A—3 962 706 discloses such an information processing unit. This information processing unit is one which makes an instruction executable on the basis of the determination that operand data necessary for executing the instruction becomes or will become effective and properly executes the instruction by hardware, and in which a first instruction has an operation code field, an input field having a sufficient number of bits to indicate whether the operand data to be used by the first instruction is active or non-active, and a destination field for specifying the input field of a second instruction to be linked with the first instruction, and the first instruction is arranged so that when it is executed, it is indicated in the input field of the second instruction specified by the destination field of the first instruction that the operand data for the second instruction is active, the information processing unit comprising:— an instruction memory for storing the instructions; a data memory for storing the operand data; an instruction fetch part for fetching an executable instruction or instructions from the instruction memory; and an operation unit for loading desired operand data from the data memory to execute the fetched instruction or instructions in parallel.

An embodiment of the present invention can provide an information processing unit which performs instruction processing on the basis of the dependency of an instruction on data and in which paths for the instruction and the data are separated and the data is transferred in dependence upon instruction flow.

An embodiment of the present invention can provide an information processing unit in which a desired one of instructions is determined on the basis of a proper sequence and a register number assign circuit automatically assigns to the instruction a register in which to place the processing result by hardware processing, and the software side is required only to provide a data flow control.

An embodiment of the present invention can provide an information processing unit in which register numbers are prepared corresponding to instructions, thereby to permit identification of data.

An embodiment of the present invention can provide an information processing unit in which when an instruction is issued to an operation unit, the content of an input field of the instruction is cleared to make it non-active, enabling the instruction to be utilized as the next instruction.

According to the present invention, there is provided an information processing unit which makes an instruction executable on the basis of determination that operand data necessary for executing the instruction becomes or will become effective and properly executes the instruction by hardware, and in which a first instruction has an operation code field, an input field having a sufficient number of bits to indicate whether the operand data to be used by the first instruction is active or non-active, and a destination field for specifying the input field of a second instruction to be linked with the first instruction and the first instruction is arranged so that when it is executed, it is indicated in the input field of the second instruction specified by the destination field of the first instruction that operand data for the second instruction is active, the information processing unit comprising:

an instruction memory for storing the instructions;

a data memory for storing the operand data;

an instruction fetch part for fetching an executable instruction or instructions from the instruction memory; and

an operation unit for loading desired operand data from the data memory to execute the fetched instruction or instructions in parallel,

characterised in that

the instruction memory and the data memory are separate, and in that data and instructions follow separate paths in the processing unit.

An embodiment of the present invention can provide a data flow type information processing unit arranged so that an input field of an instruction is given information indicating whether operand data to be used by the instruction has already been made active, and that the operand data is transferred in dependence on control corresponding to an instruction.

Reference is made, by way of example, to the accompanying drawings, in which:—

Figs. 1A and 1B are schematic diagrams showing examples of instruction formats for use in embodiments of the present invention;

Figs. 2A and 2B are schematic diagrams explanatory of linkage of instructions according to embodiments of the present invention;

Fig. 3 is a block diagram illustrating the hardware arrangement of an embodiment of the present invention;

Fig. 4A is a flowchart, and Fig. 4B is an associated list, explanatory of an instruction processing operation in an embodiment of the present invention;

Fig. 5 is a timing chart explanatory of execution of an instruction in the embodiment shown in Fig. 3;

Fig. 6 is a block diagram illustrating the hardware arrangement of another embodiment of the present invention; and

Fig. 7 is a timing chart explanatory of the execution of an instruction in the embodiment shown in Fig. 6.

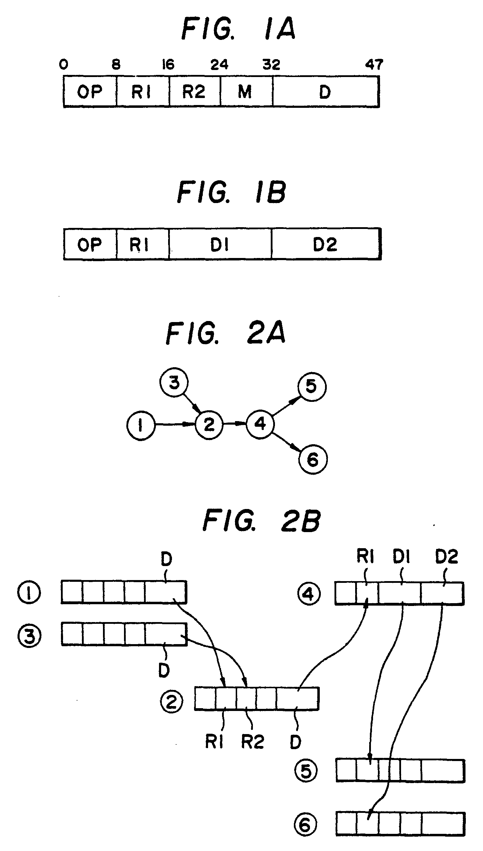

In embodiments of the present invention, instructions related to operations have such an instruction format as shown in Fig. 1A which comprises an instruction code (OP) field, two input fields ($R_1$, $R_2$), and a destination field (D). In the format of Fig. 1A, M is a field not related to the present invention and so not described. On the other hand, instructions related to control, such as copy, switch and union, have such an instruction format as shown in Fig. 1B which comprises an instruction code (OP) field, an input field ($R_1$) and two destination fields ($D_1$, $D_2$). The input field and the destination field need not always be one or two in number but may also be three or more in number.

Now, assuming such graph type instruction control linkage as shown in Fig. 2A in which "instructions ① and ③ are first executed to make an instruction ② executable and than an instruction ④ is executed to make instructions ⑤ and ⑥ executable", the content of the destination field of the preceding instruction determines its linkage with the input field of the instruction to be executed next as shown in Fig. 2B. That is to say, by the determination that operand data becomes or will become active as a result of the execution of the instruction ①, a certain value is set in the input field $R_1$ of the instruction ② specified by the destination field D of the instruction ① indicating that one of the operand data to be used by the instruction ② has become active. Similarly, by the determination that operand data becomes or will become active as a result of the execution of the instruction ③, a certain value is set in the input field $R_2$ of the instruction ② specified by the destination field D of the instruction ③, indicating that another one of the operand data to be used by the instruction ② has become active. And, by completion of the execution of the instruction ②, a certain value is set in the input field $R_1$ of the instruction ④ specified by the destination field D of the instruction ②, indicating that the instruc-

tion ④ has become executable. Likewise, by completion of the execution of the instruction ④, values are set in the input fields of the instructions ⑤ and ⑥ specified by the destination fields $D_1$ and $D_2$ of the instruction ④, whereby the instruction ④ is linked with the instructions ⑤ and ⑥.

In the case of the present invention, it is sufficient theoretically that the input field shown in Figs. 1A and 1B is a 1-bit field (indicating that the operand data has becomes active), but it is preferable that the input field be of an 8-bit field length, as shown in Figs. 1A and 1B, to permit writing therein the number of register in which the operand data is being set, thereby indicating that the operand data has become active, coupled with writing of the register number where the data is located.

Incidentally, the instructions for use in the present invention are (i) arithmetic operations, such as ADD, MULTIPLY, DIVIDE and so forth, (ii) ordinary instructions, such as COMPARE, LOGICAL, SHIFT, MASKLOGICAL, LOAD, STORE and so forth, (iii) control instructions, such as COPY, SWITCH, UNION and so forth, (iv) function link instructions, such as APPLY and so on, and (v) interface instruction for external part, such as input/output. It is also possible that these instructions are each provided both as a vector instruction and as a scalar instruction, if necessary.

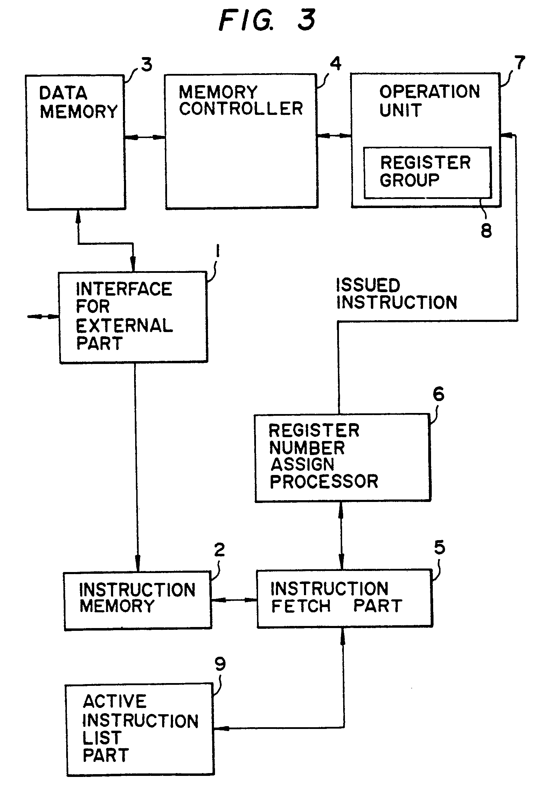

Fig. 3 illustrates the hardware structure of an embodiment of the present invention. In Fig. 3, reference numeral 1 indicates an interface for external parts; 2 designates an instruction memory having stored therein such instructions as shown in Figs. 1A and 1B; 3 identifies a data memory having stored therein operand data; 4 denotes a memory controller which performs processing of accessing the data memory 3 to load desired operand data in a register of the register number specified by the contents of the input fields $R_1$ and $R_2$ or restoring operation results in the data memory 3; 5 represents an instruction fetch part which checks whether instructions read out from the instruction memory 2 are executable and fetches the executable instruction; and 6 shows a register number assign circuit in which, when resources to be used by an executable instruction, such as an operator (an operation unit), a register and so forth, are usable, and it is determined to issue the instruction, assigns the number of a register for storing a destination operand of the instruction automatically in hardware. The assigned register number is provided to the instruction fetch part, which writes the register number into the input field of another instruction specified by the destination field of the abovesaid instruction. Reference numeral 7 refers to an operation unit, which comprises one or a plurality of operation parts which execute a desired operation; 8 signifies a register group; and 9 indicates an active instruction list part, in which executable but queued instructions are held in the form of a list. The abovesaid data memory and instruction memory may also be physically the same memory.

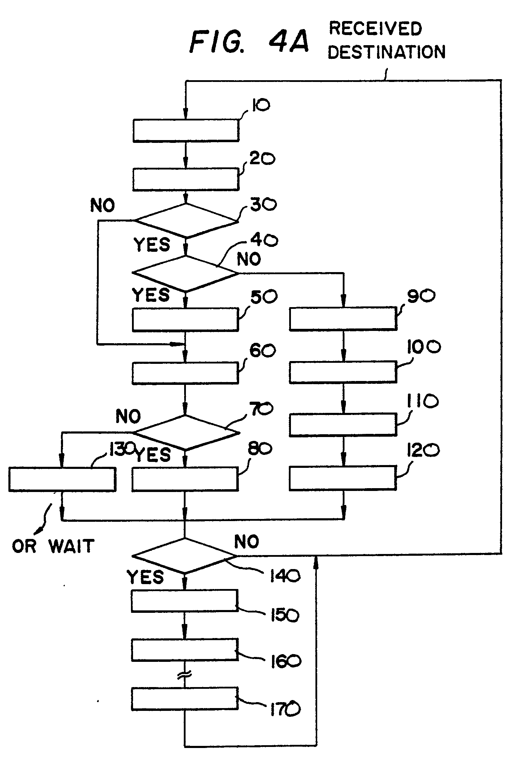

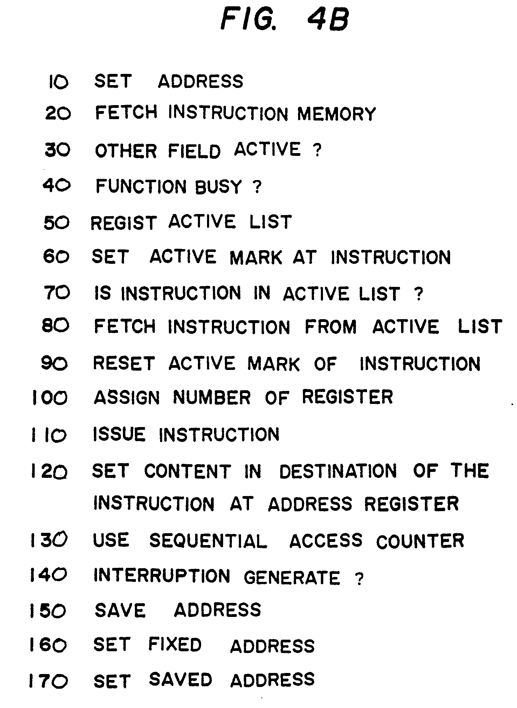

A description will be given, with reference to the flow-chart of Figs. 4A & 4B of the operation of the embodiment shown in Fig. 3. The reference numbers in Fig. 4A refer to the list of Fig. 4B. For example, step 10 in Fig. 4A indicates a SET ADDRESS process (Fig. 4B).

(A) The interface for external parts 1 has interfaces with a central processing unit, an input/output device and so on, and performs processing of transferring data between other devices and the data memory 3. Furthermore, it performs processing of writing an instruction into the instruction memory 2 as required.

(B) Now, let it bs assumed that it is determined that the execution of an instruction is completed or will be complete. In this state, address information based on the content of the destination field of the instruction is set in an address register for the instruction memory 2 (step 10, SET ADDRESS).

(C) By this, one instruction is fetched from the instruction memory 2 (step 20, FETCH INSTRUCTION MEMORY).

(D) If the fetched instruction contains an input field which requires a result of another instruction, the instruction fetch part 5 checks whether the fetched instruction's input field is active (step 30, OTHER FIELD ACTIVE P).

(E) If the input field is not active, an already assigned register number is written into the input field specified by the destination field and the fetched instruction is returned to the instruction memory 2 (step 60, SET ACTIVE MARK AT INSTRUCTION).

(F) If the input field is active, the register number is assigned and the execution of the instruction is started. At this time, however, if a desired operation unit or the like is busy (step 40, FUNCTION BUSY ?), address information representing the instruction is registered in the active instruction list part 9 (step 50, REGIST ACTIVE LIST) and the assigned register number is written into the input field of that one of the instructions in the instruction memory 2 which is specified by the destination field of the instruction (step 60, SET ACTIVE MARK AT INSTRUCTION).

(G) If another instruction has been registered in the active instruction list part 9 (step 70, IS INSTRUCTION IN ACTIVE LIST ?), then it is fetched from the instruction memory 2 for execution next (step 80, FETCH INSTRUCTION FROM ACTIVE LIST). In the event that another instruction has not been registered in the active instruction list part 9, the instruction memory 2 is accessed, for instance, in accordance with the content of a sequential memory in search for an active instruction (step 130, USE SEQUENTIAL ACCESS COUNTER). Of course, the active instruction list part 9 may be dispensed with and, in such a case, an executable instruction is executed after the desired operation unit or the like is released from the busy state but the accuracy of parallel execution of instructions is decreased, resulting in impaired performance.

(H) Going back to the steps followed after step 40, when the desired operation part or the like is not busy, and if only processing as mentioned above in (F) is performed, the instruction is left in the executable state. To avoid this, the instruction fetch part 5 clears the content of the input field of the fetched instruction and rewrites it into the instruction memory 2 on the assumption that it is determined that the instruction is completed or will be completed (step 90, RESET ACTIVE MARK OF INSTRUCTION).

(I) The register number assign circuit 6 determines, by hardware processing, the register number to be written into the input field of an instruction specified by the destination field (step 100, ASSIGN NUMBER OF REGISTER) and then issues an instruction to the operation unit 7 (step 110, ISSUE INSTRUCTION).

(J) On the other hand, the instruction fetch part 5 sets the content of the abovesaid destination field in an address register (not shown) of the instruction memory 2 (step 120).

(K) In the operation unit 7 a plurality of instruction usually run in parallel.

(L) When an interrupt occurs (step 140, INTERRUPTION GENERATE ?), for instance a fixed address is produced (step 160, SET FIXED ADDRESS after step 150, SAVE ADDRESS) as in the case of the conventional data flow type information processing unit and an interrupt-servicing program which starts with an instruction stored at that fixed address is executed.

(M) Upon completion of a certain instruction, the operation unit 7 sets the operation results in a register predetermined by the register number assigne circuit 6 (step 170, SET SAVED ADDRESS). In the above, if a plurality of interrupt conditions are present when setting the address register of the instruction memory 2, then an address of an appropriate interrupt servicing program is set using a priority circuit.

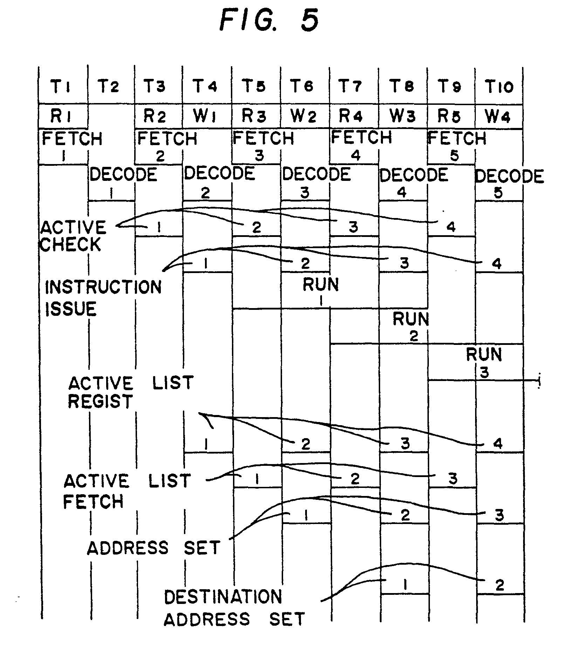

Fig. 5 shows an example of a timing chart of the execution of an instruction according to the present invention. In a time slot $T_1$, an instruction is fetched; in a time slot $T_2$, the instruction is decoded; in a time slot $T_3$, it is checked whether the instruction is executable, and the register number is assigned; in a time slot $T_4$, the instruction is issued to the operation unit 7; in time slots $T_5$ to $T_8$, operation specified by the instruction is executed; in the time slot $T_8$, an address based on the content of the destination field of the instruction is set in the address register of the instruction memory 2; and in a time slot $T_9$, the next instruction is fetched which is linked with the instruction executed. When the operation unit happens to be busy (in time slot $T_3$), the instruction is registered in the active instruction list part 9 in the time slot $T_4$ and processing of fetching another instruction from the active instruction list part 9 takes place in the time slot $T_5$ and, in the time slot $T_6$, the address setting is performed.

In the case where the instruction contains two destination fields, one of two next instructions is fetched on the basis of the content of a first one of two destination fields and then the other next instruction is fetched on the basis of the content of the second destination field. The instructions 2 to 5 are processed one after another in a pipeline fashion as shown in Fig. 5.

In the present invention, for example, a plurality of operators in the operation unit 7 need not always be synchronized in operation but the pipelines may also operate in parallel and asynchronously.

The above data register can easily be applied to vector processing, too, in which a plurality of data (vector data) are all stored in one register and a plurality of the same operations are executed on these data at a time. Scalar processing which processes a single data can also be simplified by considering that it is a special case of handling a single data in the vector processing. When the register number are assigned, they may sometimes exceed the number of registers that hardware has, causing a deadlock. This can be avoided by a system in which program execution is limited by software within a range in which the register numbers do not exceed a specified number of registers, or a system in which the data is saved by hardware into a memory or another register, thereby to release the data register from the busy state.

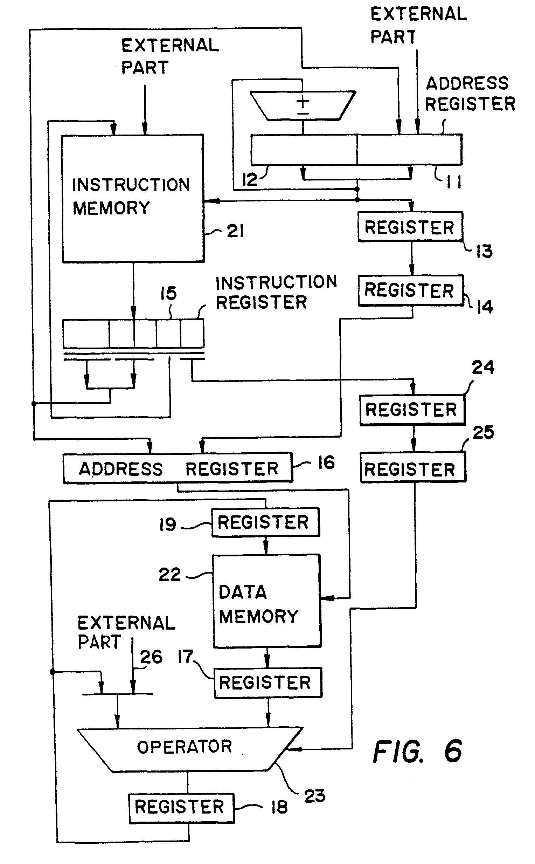

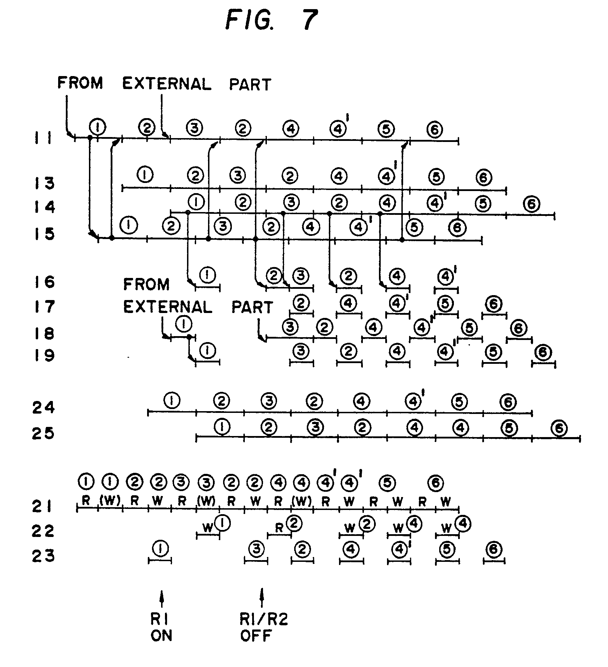

Figs. 6 and 7 show the hardware structure of another embodiment of the present invention and a timing chart of the execution of an instruction in the embodiment, respectively. Circled reference signs below refer to Fig. 2A and Fig. 7. An instruction group is preset by an external control circuit in an instruction memory 21. Upon application of external data, an address is set in an address register 11 and the instruction ① is read out from instruction memory 21 and set in an instruction register 15. Thereafter the external data is applied from an input 26 and provided via registers 18 and 19 to a data memory 22. The address of the location in the data memory 22 is supplied from an address register 16 via registers 13 and 14. Since it is known that the instruction read out into the instruction register 15 is an external set instruction, the instruction ② is read out on the basis of the content of its destination field (that is, the R1 part of the instruction ②. The instruction ② set in the instruction register 15 cannot be executed because its R2 part is not active. Then the operation shifts to processing of the instruction ③ resulting from the arrival of external data. The data entered from the input 26 is provided to the register 18. The destination of the instruction ③ is the R2 part of the instruction ② and the instruction ② has already been stored in the instruction register 15 until then. Since its R1 part is active, the instruction ② is executable. Then the instruction ② is provided to an operator 23 via the register 18. At this time, data corresponding to the R1 part is read out from the data memory 22 by the address of the address register 16 based on the instruction ② stored in the instruction register 15 and the data thus read out is provided to the register 17, from which it is applied to the operator 23 together with the abovesaid data stored in the register 18. As a result of this, the instruction ② is executed and the execution result is applied to the register 18. The output of the register 18 is provided to the register 19 and, at this time, the destination of the instruction ② sent via the registers 13 and 14 is provided via the address register 16 to the data memory 22, by which the result of execution of the instruction ② in the register 19 is written into the data memory 22. Since the destination of the instruction ② is ④ the abovesaid execution result is written into the data memory 22 at an address corresponding to the instruction ④. The instruction ④ is a two-brach instruction and, consequently, data ④ and ④' and written into the data memory 22 at addresses corresponding to the instructions ⑤ and ⑥, respectively. In this case, the instructions ②, ④ and ④' are written into the data memory 22 via a route [address register 11→register 13→register 14→address register 16]. Since the data is the same as the result of execution of the instruction ②, the same data as the instruction ② is held in the registers 18 and 19. The instructions ⑤ and ⑥ are linked with the next instructions and the processing therefor is performed in the same way as mentioned above; hence no description will be given thereof.

In the above, if the number of words of the instruction memory and the data memory are selected to be the same, data does not overflow. The addresses of the instruction memory and the data memory have one-to-one correspondence. Incidentally, since the data memory is not used in some cases, the number of words of the data memory may be smaller than the number of words of the instruction memory but, in such a case, an address converter or associative storage is needed. In the timing chart of Fig. 7 the execution of an instruction is performed in one cycle; but, if several cycles are required for the execution of an instruction, an instruction fetch must be delayed for several cycles correspondingly.

Registers 24 and 25 may carry the instruction code of an instruction set in the instruction register 15 to the operator 23 to determine the operation to be effected.

Address register part 12 and the illustrated ± (+1) counter may be for address incrementing (or decrementing).

**Claims**

1. An information processing unit which makes an instruction executable on the basis of determination that operand data necessary for executing the instruction becomes or will become effective and properly executes the instruction by hardware, and in which a first instruction has an operation code field, (OP) an input field (R1, R2) having a sufficient number of bits to indicate whether the operand data to be used by the first instruction is active or non-active, and a destination field (D, D1, D2) for specifying the input field of a second instruction to be linked with the first instruction and the first instruction is arranged so that when it is executed, it is indicated in the input field of the second instruction specified by the destination field of the first instruction that operand data for the second instruction is active, the information processing unit comprising:

an instruction memory (2) for storing the instructions;

a data memory (3) for storing the operand data;

an instruction fetch part (5) for fetching an executable instruction or instructions from the instruction memory (2); and

an operation unit (7) for loading desired operand data from the data memory (3) to execute the fetched instruction or instructions in parallel,

characterised in that

the instruction memory (2) and the data memory (3) are separate, and in that data and instructions follow separate paths in the processing unit.

2. An information processing unit according to claim 1, wherein the operation unit contains pipelines for a plurality of operators, said pipelines being operable in parallel and asynchronously.

3. An information processing unit according to claim 1 or 2, wherein the operation unit performs vector processing, vector data being stored all in one data register, executing the same operation on all the vector data at a time.

4. An information processing unit according to claim 3, wherein when the numbers of data registers are assigned to the input fields to indicate that the instruction is active the operation unit uses software which executes a program through the use of a limited number of registers provided by hardware so as not to exceed the total number of registers available.

5. An information processing unit according to claim 3, wherein when the number of registers to be used would exceed the number available, the operation unit saves data from one of the registers into a memory or another register in order to release the data register from its busy state.

**Patentansprüche**

1. Informationsverarbeitungseinheit, die eine Instruktion auf der Basis der Bestimmung, daß Operandendaten, die für die Ausführung der Instruktion notwendig sind, effektiv sind oder werden, ausführbar macht und die Instruktion durch Hardware geeignet ausführt, und bei der die erste Instruktion ein Operationscodefeld (OP) hat, ein Eingabefeld (R1, R2), das eine hinreichende Zahl von Bits hat, um anzuzeigen, ob die Operandendaten, die von der ersten Instruktion verwendet werden sollen, aktiv oder inaktiv sind, und ein Bestimmungsfeld (D, D1, D2) zum Spezifizieren des Eingabefelds einer zweiten Instruktion, die mit der ersten Instruktion verbunden werden soll, hat, und die erste Instruktion so angeordnet ist, daß dann, wenn sie ausgeführt wird, es in dem Eingabefeld der zweiten Instruktion, das durch das Bestimmungsfeld der ersten Instruktion spezifiziert wird, angezeigt wird, daß Operandendaten für die zweite Instruktion aktiv sind, welche Informationsverarbeitungseinheit umfaßt:

einen Instruktionsspeicher (2) zum Speichern der Instruktionen;

einen Datenspeicher (3) zum Speichern der Operandendaten;

einen Instruktionsabrufteil (5), zum Abrufen einer ausführbaren Instruktion oder Instruktionen von dem Instruktionsspeicher (2); und

eine Operationseinheit (7), zum Ladgen gewünschter Operandendaten von dem Datenspeicher (3), um die abgerufene Instruktion oder Instruktionen parallel auszuführen,

dadurch gekennzeichnet, daß

der Instruktionsspeicher (2) und der Datenspeicher (3) getrennt sind, und daß Daten und Instruktionen in der Verarbeitungseinheit verschiedenen Wegen folgen.

2. Informationsverarbeitungseinheit nach Anspruch 1, bei der die Operationseinheit Pipelines für eine Vielzahl von Operatoren enthält, welche Pipelines parallel und asynchron betreibbar sind.

3. Informationsverarbeitungseinheit nach Anspruch 1 oder 2, bei der die Operationseinheit Vektorverarbeitung durchführt, wobei alle Vektordaten in einem Datenregister gespeichert werden, indem dieselbe Operation zur gleichen Zeit an allen Vektordaten ausgeführt wird.

4. Informationsverarbeitungseinheit nach Anspruch 3, bei der, wenn die Zahl der Datenregister den Eingabefeldern zugeordnet werden, um anzuzeigen, daß die Instruktion aktiv ist, die Operationseinheit Software verwendet, die ein Programm durch die Verwendung einer limitierten Zahl von Registern durchführt, die durch Hardware vorgesehen sind, um so die gesamte Zahl von verfügbaren Registern nicht zu überschreiten.

5. Informationsverarbeitungseinheit nach Anspruch 3, bei der, wenn die Zahl der Register, die verwendet werden sollen, die verfügbare Zahl überschrieten würde, die Operationseinheit Daten von einem der Register in einen Speicher oder ein anderes Register sichert, um die Datenregister aus ihrem Arbeitszustand freizugeben.

**Revendications**

1. Unité de traitement d'information rendant une instruction exécutable en fonction de la détermination du fait que des données d'opérande nécessaires pour l'exécution de l'instruction deviennent ou deviendront opératoires, et provoquent l'exécution convenable de l'instruction de manière matérielle, et dans laquelle une première instruction a une zone de code opération (OP), une zone d'entrée ($R_1$, $R_2$) ayant un nombre suffisant de bits pour qu'elle indique si les données d'opérande qui doivent être utilisées par la première instruction sont actives ou non, et une zone de destination (D, $D_1$, $D_2$) destinée à spécifier

la zone d'entrée d'une seconde instruction destinée à être liée à la première instruction, la première instruction étant réalisée de manière que, lorsqu'elle est exécutée, la zone d'entrée de la seconde instruction spécifiée par la zone de destination de la première instruction indique que les données d'opérande destinées à la seconde instruction sont actives, l'unité de traitement d'information comprenant:

une mémoire d'instructions (2) destinée à mémoriser les instructions,

une mémoire de données (3) destinée à mémoriser les données d'opérande,

une partie (5) d'appel d'instruction destinée à appeler une ou plusieurs instructions exécutables de la mémoire d'instructions (2), et

une unité d'exécution (7) destinée à charger les données voulues d'opérande provenant de la mémoire de données (3) afin que l'instruction ou les instructions appelées soient exécutées en parallèle,

caractérisée en ce que:

la mémoire d'instructions (2) et la mémoire de données (3) sont séparées, et en ce que des données et des instructions suivent des trajets séparés dans l'unité de traitement.

2. Unité de traitement d'information selon la revendication 1, dans laquelle l'unité d'exécution contient des pipelines correspondant à plusieurs opérateurs, les pipelines travaillant en parallèle et de manière asynchrone.

3. Unité de traitement d'information selon la revendication 1 ou 2, dans laquelle l'unité d'exécution exécute un traitement vectoriel, des données vectorielles étant toutes mémorisées dans un registre de données, la même opération étant exécutée sur toutes les données vectorielles à un moment donné.

4. Unité de traitement d'information selon la revendication 3, dans laquelle, lorsque les numéros de reigstres de données sont affectés aux zones d'entrée afin qu'ils indiquent que l'instruction est active, l'unité d'exécution utilisé un logiciel qui exécute un programme à l'aide d'un nombre limité de registres formés par le matériel de manière que le nombre total de registres disponibles ne soit pas dépassé.

5. Unité de traitement d'information selon la revendication 3, dans laquelle, si le nombre de registres qui doit être utilisé doit dépasser le nombre disponible, l'unité d'exécution sauvegarde les données de l'un des registres dans une mémoire ou un autre registre afin que le registre de données soit libéré de son état occupé.

## FIG. 1A

## FIG. 1B

## FIG. 2A

## FIG. 2B

1

## FIG. 3

*FIG. 4A* RECEIVED DESTINATION

# FIG. 4B

10  SET  ADDRESS

20  FETCH INSTRUCTION MEMORY

30  OTHER FIELD ACTIVE ?

40  FUNCTION BUSY ?

50  REGIST ACTIVE LIST

60  SET ACTIVE MARK AT INSTRUCTION

70  IS INSTRUCTION IN ACTIVE LIST ?

80  FETCH INSTRUCTION FROM ACTIVE LIST

90  RESET ACTIVE MARK OF INSTRUCTION

100  ASSIGN NUMBER OF REGISTER

110  ISSUE INSTRUCTION

120  SET CONTENT IN DESTINATION OF THE
INSTRUCTION AT ADDRESS REGISTER

130  USE SEQUENTIAL ACCESS COUNTER

140  INTERRUPTION GENERATE ?

150  SAVE ADDRESS

160  SET FIXED ADDRESS

170  SET SAVED ADDRESS

## FIG. 5

| T1 | T2 | T3 | T4 | T5 | T6 | T7 | T8 | T9 | T10 |
|---|---|---|---|---|---|---|---|---|---|
| R1 | | R2 | W1 | R3 | W2 | R4 | W3 | R5 | W4 |

| FETCH 1 | | FETCH 2 | | FETCH 3 | | FETCH 4 | | FETCH 5 | |

DECODE 1 ... DECODE 2 ... DECODE 3 ... DECODE 4 ... DECODE 5

ACTIVE CHECK    1    2    3    4

INSTRUCTION ISSUE    1    2    3    4    RUN 1    RUN 2    RUN 3

ACTIVE LIST REGIST    1    2    3    4

ACTIVE LIST FETCH    1    2    3

ADDRESS SET    1    2    3

DESTINATION ADDRESS SET    1    2

FIG. 6

## FIG. 7

FROM EXTERNAL PART

FROM EXTERNAL PART

R1
ON

R1/R2
OFF